(19) Europäisches Patentamt
European Patent Office
Office européen des brevets

(11) EP 4 636 836 A2

(12) EUROPEAN PATENT APPLICATION

(43) Date of publication:
**22.10.2025 Bulletin 2025/43**

(21) Application number: **25169614.2**

(22) Date of filing: **10.04.2025**

(51) International Patent Classification (IPC):
***H01M 4/13*** *(2010.01)* ***H01M 4/62*** *(2006.01)*
*C01B 32/158* *(2017.01)*

(52) Cooperative Patent Classification (CPC):
**H01M 4/625; H01M 4/13; H01M 4/622;**
C01B 32/158; H01M 4/623

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **16.04.2024 KR 20240050575**

(71) Applicant: **SAMSUNG SDI CO., LTD.**
**Yongin-si, Gyeonggi-do 17084 (KR)**

(72) Inventors:
- **YANG, Mihwa**
  **17084 Gyeonggi-do (KR)**
- **KIM, Minjae**
  **17084 Gyeonggi-do (KR)**

(74) Representative: **Michalski Hüttermann & Partner Patentanwälte mbB**
**Kaistraße 16A**
**40221 Düsseldorf (DE)**

# (54) CONDUCTIVE MATERIAL DISPERSION FOR RECHARGEABLE LITHIUM BATTERY, ELECTRODE SLURRY INCLUDING THE CONDUCTIVE MATERIAL DISPERSION, AND RECHARGEABLE LITHIUM BATTERY INCLUDING THE CONDUCTIVE MATERIAL DISPERSION

(57) Example embodiments relate to conductive material dispersions, electrode slurries, and rechargeable lithium batteries. The conductive material dispersion includes a conductive material, a solvent, and a dispersant. A particle size distribution graph of the conductive material dispersion includes a first peak that appears in a particle size range of equal to or less than about 0.1 μm, and a second peak that appears in a particle size range of greater than about 0.1 μm. A ratio of the maximum intensity of the first peak to the maximum intensity of the second peak is B. in a range of about 30 to about 60.



Processed by Luminess, 75001 PARIS (FR)

## Description

CROSS-REFERENCE TO RELATED APPLICATION

This U.S. nonprovisional application claims the benefit of priority under 35 U.S.C § 119 to Korean Patent Application No. 10-2024-0050575 filed on April 16, 2024 in the Korean Intellectual Property Office, the disclosure of which is hereby incorporated by reference in its entirety.

BACKGROUND

The present disclosure relates to a conductive material dispersion for a rechargeable lithium battery and a rechargeable lithium battery including the conductive material dispersion.

With an increased spread of battery using electronic devices, such as, e.g., mobile phones, laptop computers, electric vehicles, and a like, there is increasing demand for rechargeable batteries with high energy density and high capacity.

A rechargeable lithium battery includes a positive electrode, a negative electrode, and an electrolyte, the positive and negative electrodes include an active material in which intercalation and deintercalation are possible, and generates electrical energy caused by oxidation and reduction reactions when lithium ions are intercalated and deintercalated.

SUMMARY

An example embodiment of the present disclosure provides a conductive material dispersion for a rechargeable lithium battery having improved solubility and dispersibility of a conductive material and superior or improved electrical properties.

An example embodiment of the present disclosure provides a rechargeable lithium battery including a conductive material dispersion.

According to an example embodiment of the present disclosure, a conductive material dispersion for a rechargeable lithium battery may include a conductive material; a solvent; and a dispersant. A particle size distribution graph of the conductive material dispersion may include a first peak that appears in a particle size range of equal to or less than about 0.1 μm, and a second peak that appears in a particle size range of greater than about 0.1 μm. If a maximum intensity of the first peak is referred to as A, and a maximum intensity of the second peak is referred to as B, then A and B may satisfy Equation 1 below.

[Equation 1]

$$30 \leq A/B \leq 60$$

According to an example embodiment of the present disclosure, an electrode slurry for a rechargeable lithium battery may include an electrode active material; a binder; and a conductive material dispersion. A particle size distribution graph of the conductive material dispersion may include a first peak that appears in a particle size range of equal to or less than about 0.1 μm; and a second peak that appears in a particle size range of greater than about 0.1 μm. If a maximum intensity of the first peak is referred to as A, and a maximum intensity of the second peak is referred to as B, then A and B may satisfy the same Equation 1 as discussed above.

[Equation 1]

$$30 \leq A/B \leq 60$$

According to an example embodiment of the present disclosure, a rechargeable lithium battery may include an electrode; and an electrolyte. The electrode may include a current collector; and an active material layer prepared using the electrode slurry for the rechargeable lithium battery.

BRIEF DESCRIPTION OF DRAWINGS

FIG. 1 illustrates a simplified conceptual diagram showing a rechargeable lithium battery according to an example embodiment of the present disclosure.

FIGS. 2 to 5 illustrate simplified diagrams showing a rechargeable lithium battery according to an example embodiment of the present disclosure.

FIG. 6 illustrates a graph showing the particle size distribution of a conductive material dispersion according to an example embodiment of the present disclosure.

DETAILED DESCRIPTION OF EMBODIMENTS

In order to sufficiently understand the configuration and effect of the present disclosure, some example embodiments of the present disclosure will be described with reference to the accompanying drawings. It should be noted, however, that the present disclosure is not limited to the following example embodiments, and may be implemented in various forms. Rather, the example embodiments are provided only to disclose the present disclosure and let those skilled in the art fully know the scope of the present disclosure.

In this description, it will be understood that, when an element is referred to as being "on" another element, the element can be directly on the other element or intervening elements may be present between therebetween. In the drawings, thicknesses of some components are exaggerated for effectively explaining the technical contents. Like reference numerals refer to like elements throughout the specification.

Unless otherwise specially noted in this description, the expression of singular form may include the expression of plural form. In addition, unless otherwise specially noted, the phrase "A or B" may indicate "A but not B," "B but not A," and "A and B." The terms "comprises/includes" and/or "comprising/including" used in this description do not exclude the presence or addition of one or more other components.

As used herein, the term "combination thereof" may refer to a mixture, a stack, a composite, a copolymer, an alloy, a blend, or a reaction product.

Unless otherwise especially defined in this description, a particle diameter may be an average particle diameter. In addition, a particle diameter indicates an average particle diameter ($D_{50}$) where a cumulative volume is about 50 volume % in a particle size distribution. The average particle diameter ($D_{50}$) may be measured by a method widely known to those skilled in the art, for example, by a particle size analyzer, a transmission electron microscope (TEM) image, or a scanning electron microscope (SEM) image. Alternatively, a dynamic light-scattering measurement device is used to perform a data analysis, the number of particles is counted for each particle size range, and then from this, an average particle diameter ($D_{50}$) value may be obtained through a calculation. Dissimilarly, a laser scattering method may be utilized to measure the average particle diameter ($D_{50}$). In the laser scattering method, a target particle is distributed in a dispersion solvent, introduced into a laser scattering particle measurement device (e.g., MT3000 commercially available from Microtrac, Inc), irradiated with ultrasonic waves of 28 kHz at a power of 60 W, and then an average particle diameter ($D_{50}$) is calculated in the 50% standard of particle diameter distribution in the measurement device.

When the terms "about" or "substantially" are used in this specification in connection with a numerical value, it is intended that the associated numerical value include a tolerance of $\pm$10% around the stated numerical value. When ranges are specified, the range includes all values therebetween such as increments of 0.1%.

A conductive material dispersion for a rechargeable lithium battery according to an example embodiment of the present disclosure may include a conductive material, a solvent, and a dispersant.

Referring to FIG. 6, a graph showing a particle size distribution of the conductive material dispersion may include a first peak that appears in a particle size range of equal to or less about 0.1 $\mu$m. The graph may include a second peak that appears in a particle size range of greater than about 0.1 $\mu$m. If a maximum intensity of the first peak is referred to as A, and a maximum intensity of the second peak is referred to as B, then A and B may satisfy a relationship of Equation 1 discussed above and expressed below.

[Equation 1]

$$30 \leq A/B \leq 60$$

With reference to FIG. 6, the following describes the maximum intensity value A of the first peak and the maximum intensity value B of the second peak.

There particle size of the conductive material included in the dispersion may be measured. The measured particle size may be considered as an x-axis. A volume density (as a percentage) of the measured particle may be considered as a y-axis. Symbol "A" may be defined to refer to a height of maximum value of peaks that appear in the particle size range of equal to or less than about 0.1 $\mu$m. Symbol "B" may be defined to refer to a height of maximum value of peaks that appear in the particle size range of greater than about 0.1 $\mu$m. The volume density may indicate a volume distribution. The volume density may denote a volume percent of particles which are present in the dispersion and each of which has a

size shown on the x-axis of FIG. 6.

The higher the value of A, the larger the distribution of particles each having a particle size of equal to or less than about 0.1 μm. The A may have a value between about 10 vol% and about 20 vol%. For example, the A may have a value ranging from about 10 vol% to about 18 vol%, from about 10 vol% to about 17 vol%, from about 10 vol% to about 16 vol%, from about 10 vol% to about 15 vol%, or from about 10 vol% to about 14 vol%. When the value of A satisfies the range above, conductive particles which particle size is equal to or less than about 0.1 μm may be sufficiently dispersed in a space between large-sized particles to impart superior or improved conductivity to an active material.

The higher the value of B, the larger the distribution of particles each having a particle size of greater than about 0.1 μm. The B may have a value between about 0.1 vol% and about 5 vol%. For example, the B may have a value ranging from about 0.1 vol% to about 3 vol%, from about 0.1 vol% to about 1 vol%, from about 0.1 vol% to about 0.5 vol%, from about 0.1 vol% to about 0.4 vol%, or from about 0.1 vol% to about 0.3 vol% When conductive particles having a particle size greater than about 0.1 μm are included in an appropriate amount, their occupying volume may be relatively large to easily fill a space between active materials. When the value of B satisfies the range above, the conductive material dispersion may include an appropriate amount of conductive particle having a particle size greater than about 0.1 μm which is relatively difficult to disperse, and thus there may be an increase in electrical conductivity within an electrode plate.

In an example embodiment of the present disclosure, the conductive material dispersion for a rechargeable lithium battery may satisfy the relationship of Equation 2 below for Dmax during particle size distribution measurement.

[Equation 2]

$$0.1\ \mu m \leq Dmax \leq 10\ \mu m$$

Dmax may indicate a maximum particle diameter of a conductive material included in the conductive material dispersion. The maximum particle diameter may be the largest one of particle diameters measured through the aforementioned methods used to measure the average diameter ($D_{50}$). The Dmax may have a value between about 0.1 μm to about 10 μm. For example, Dmax may be a value between about 0.1 μm to about 8 μm, between about 0.1 μm to about 7 μm, or between about 0.1 μm to about 5 μm. Dmax may be equal to or greater than about 2 μm, equal to or greater than about 3 μm, or equal to or greater than about 4 μm. When Dmax satisfies any of the ranges above, the conductive material dispersion may not include large-sized particles which are relatively difficult to disperse, and thus there may be an increase in electrical conductivity within an electrode plate.

According to an example embodiment of the present disclosure, the conductive material for a rechargeable lithium battery may have a specific surface area (SSA) of about 260 $m^2/g$ to about 1,000 $m^2/g$. For example, the specific surface area (SSA) of the conductive material may range from about 270 $m^2/g$ to about 1,000 $m^2/g$, from about 280 $m^2/g$ to about 1,000 $m^2/g$, or from about 290 $m^2/g$ to about 1,000 $m^2/g$. The specific surface area (SSA) of the conductive material may be equal to or less than about 500 $m^2/g$ or equal to or less than about 300 $m^2/g$. When the range above is satisfied, electron movement of a manufactured electrode may be easily achieved even when the conductive material dispersion includes a small amount of the conductive material.

According to an example embodiment of the present disclosure, the conductive material of the conductive material dispersion for a rechargeable lithium battery may include at least one of natural graphite, artificial graphite, carbon black, acetylene black, Ketjen black, carbon fiber, carbon nano-fiber, and carbon nano-tube.

The conductive material may include carbon nano-tube.

The carbon nano-tube may include at least one of single-walled carbon nano-tubes, double-walled carbon nano-tubes, and multi-walled carbon nano-tubes.

The carbon nano-tube may have an average length that is equal to or less than about 100 μm, or about 0.1 μm to about 100 μm. When the average length of the carbon nano-tube satisfies any of the ranges above, there may be an improvement in impregnation of an electrolyte into an electrode prepared using the conductive material dispersion, as well as an increase in mobility of ions in batteries, while exhibiting appropriate conductivity.

The carbon nano-tube may have an average diameter of about 1 nm to about 1 μm, about 1 nm to about 100 nm, or about 1 nm to about 5 nm. The diameter of the carbon nano-tube may refer to a length of a minor axis perpendicular to a major axis. When the average diameter of the carbon nano-tube is included within the range above, the conductivity may be imparted to a wider volume (area) even with a small amount of the carbon nano-tube.

The carbon nano-tube may have an amount of about 1 wt% to about 5 wt%, about 2 wt% to about 4 wt%, or about 2.2 wt% to about 3 wt% relative to the total 100 wt% of the conductive material dispersion for a rechargeable lithium battery. When the amount of the carbon nano-tube is included in any of the ranges above, it may be possible to obtain the conductive material dispersion having a suitable viscosity and to manufacture an electrode exhibiting desired, advantageous or improved electrode characteristics when the electrode is manufactured using the conductive material dispersion.

The conductive material dispersion may include a solvent.

The solvent may include water.

The solvent may include an amide-based polar organic solvent. For example, the solvent may include at least one of dimethylformamide, diethylformamide, dimethylacetamide (DMAc), and N-methylpyrrolidone (NMP).

The solvent may include alcohol. For example, the solvent may include at least one of methanol, ethanol, 1-propanol, 2-propanol (isopropyl alcohol), 1-butanol (n-butanol), 2-methyl-1-propanol (isobutanol), 2-butanol (sec-butanol), 1-methyl-2-propanol (tertbutanol), pentanol, hexanol, heptanol, and octanol.

The solvent may include polyhydric alcohol. For example, the solvent may include at least one of ethylene glycol, diethylene glycol, triethylene glycol, propylene glycol, 1,3-propanediol, 1,3-butanediol, 1,5-pentanediol, hexylene glycol, glycerin, trimethylolpropane, pentaerythritol, and sorbitol.

The solvent may include ether. For example, the solvent may include at least one of ethylene glycol monomethyl ether, diethylene glycol monomethyl ether, triethylene glycol monomethyl ether, tetraethylene glycol monomethyl ether, ethylene glycol monoethyl ether, diethylene glycol monoethyl ether, triethylene glycol monoethyl ether, tetraethylene glycol monoethyl ether, ethylene glycol monobutyl ether, diethylene glycol monobutyl ether, triethylene glycol monobutyl ether, and tetraethylene glycol monobutyl ether.

The solvent may include ketone. For example, the solvent may include at least one of glycol ethers, acetone, methyl ethyl ketone, methyl isobutyl ketone, and cyclopentanone.

The solvent may include ester. For example, the solvent may include at least one of ethyl acetate, $\gamma$-butyrolactone, and $\varepsilon$-caprolactone.

The conductive material dispersion may include a dispersant. The dispersant may have an amount of about 0.1 wt% to about 30 wt%, about 0.2 wt% to about 5 wt%, about 0.2 wt% to about 1 wt%, about 0.2 wt% to about 0.6 wt%, about 0.2 wt% to about 0.5 wt%, or about 0.2 wt% to about 0.4 wt% relative to the total 100 wt% of the conductive material dispersion.

The dispersant may include at least one of hydrogenated nitrile butadiene rubber (HNBR) derivatives, sodium dodecylbenzenesulfonate, and carboxymethyl cellulose.

According to some example embodiments of the present disclosure, an electrode slurry for a rechargeable lithium battery may include an electrode active material, a binder, and a conductive material dispersion. The conductive material dispersion is discussed above, and a detailed description thereof will be omitted below.

The electrode active material may include a positive electrode active material and a negative electrode active material.

Positive Electrode Active Material

The positive electrode active material in the positive electrode active material layer (see AML1 of FIG. 1) may include a compound (e.g., lithiated intercalation compound) that can reversibly intercalate and deintercalate lithium. For example, the positive electrode active material may include at least one kind of composite oxide including lithium and metal such as at least one of cobalt, manganese, nickel, and a combination thereof.

The composite oxide may include lithium transition metal composite oxide, for example, at least one of lithium-nickel-based oxide, lithium-cobalt-based oxide, lithium-manganese-based oxide, lithium-iron-phosphate-based compounds, cobalt-free nickel-manganese-based oxide, or a combination thereof.

For example, the positive electrode active material may include a compound expressed by one of chemical formulae below. $Li_aA_{1-b}X_bO_{2-c}D_c$ (where $0.90 \leq a \leq 1.8$, $0 \leq b \leq 0.5$, and $0 \leq c \leq 0.05$); $Li_aMn_{2-b}X_bO_{4-c}D_c$ (where $0.90 \leq a \leq 1.8$, $0 \leq b \leq 0.5$, and $0 \leq c \leq 0.05$); $Li_aNi_{1-8-c}Co_bX_cO_{2-\alpha}D_\alpha$ (where $0.90 \leq a \leq 1.8$, $0 \leq b \leq 0.5$, $0 \leq c \leq 0.5$, and $0 < \alpha < 2$); $Li_aNi_{1-b-c}Mn_dX_cO_{2-\alpha}D_\alpha$ (where $0.90 \leq a \leq 1.8$, $0 \leq b \leq 0.5$, $0 \leq c \leq 0.5$, and $0 < \alpha < 2$); $Li_aNi_bCo_cL^1_dG_eO_2$ (where $0.90 \leq a \leq 1.8$, $0 \leq b \leq 0.9$, $0 \leq c \leq 0.5$, $0 \leq d \leq 0.5$, and $0 \leq e \leq 0.1$); $Li_aNiG_bO_2$ (where $0.90 \leq a \leq 1.8$ and $0.001 \leq b \leq 0.1$); $Li_aCoG_bO_2$ (where $0.90 \leq a \leq 1.8$ and $0.001 \leq b \leq 0.1$); $Li_aMn_{1-b}G_bO_2$ (where $0.90 \leq a \leq 1.8$ and $0.001 \leq b \leq 0.1$); $Li_aMn_2G_bO_4$ (where $0.90 \leq a \leq 1.8$ and $0.001 \leq b \leq 0.1$); $Li_aMn_{1-g}G_gPO_4$ (where $0.90 \leq a \leq 1.8$ and $0 \leq g \leq 0.5$); $Li_{(3-f)}Fe_2(PO_4)_3$ (where $0 \leq f \leq 2$); $Li_aFePO_4$ (where $0.90 \leq a \leq 1.8$).

In the chemical formulae above, A is or includes Ni, Co, Mn, or a combination thereof, X is or includes Al, Ni, Co, Mn, Cr, Fe, Mg, Sr, V, a rare-earth element, or a combination thereof, D is or includes O, F, S, P, or a combination thereof, G is Al, Cr, Mn, Fe, Mg, La, Ce, Sr, V, or a combination thereof, and $L^1$ is or includes Mn, Al, or a combination thereof.

For example, the positive electrode active material may be a high nickel-based positive electrode active material having a nickel amount that is equal to or greater than about 80 mol%, equal to or greater than about 85 mol%, equal to or greater than about 90 mol%, equal to or greater than about 91 mol%, or equal to or greater than about 94 mol% and equal to or less than about 99 mol% relative to 100 mol% of metal devoid of lithium in the lithium transition metal composite oxide. The high-nickel-based positive electrode active material at any of the above ranges of concentration may achieve high capacity and thus may be applied to a high-capacity and high-density rechargeable lithium battery.

Negative Electrode Active Material

The negative electrode active material in the negative electrode active material layer (see AML2 of FIG. 1) may include a material that can reversibly intercalate and deintercalate lithium ions, lithium metal, a lithium metal alloy, a material that can dope and de-dope lithium, or transition metal oxide.

The material that can reversibly intercalate and deintercalate lithium ions may include a carbon-based negative electrode active material, for example, at least one of crystalline carbon, amorphous carbon, or a combination thereof. For example, the crystalline carbon may include graphite such as non-shaped, sheet-shaped, flake-shaped, sphere-shaped, or fiber-shaped natural or artificial graphite, and the amorphous carbon may include soft carbon, hard carbon, mesophase pitch carbon, or calcined coke.

The lithium metal alloy may include an alloy of lithium and metal such as at least one of Na, K, Rb, Cs, Fr, Be, Mg, Ca, Sr, Si, Sb, Pb, In, Zn, Ba, Ra, Ge, Al, and Sn.

The material that can dope and de-dope lithium may include a Si-based negative electrode active material or a Sn-based negative electrode active material. The Si-based negative electrode active material may include at least one of silicon, silicon-carbon composite, SiOx (where $0<x<2$), Si-Q alloy (where Q is alkali metal, alkaline earth metal, Group 13 element, Group 14 element (except for Si), Group 15 element, Group 16 element, transition metal, a rare-earth element, or a combination thereof), or a combination thereof. The Sn-based negative electrode active material may include Sn, $SnO_2$, a Sn-based alloy, a combination thereof.

The silicon-carbon composite may be or include a composite of silicon and amorphous carbon. According to an example embodiment, the silicon-carbon composite may have a structure in which the amorphous carbon is coated on a surface of the silicon particle. For example, the silicon-carbon composite may include a secondary particle (core) in which primary silicon particles are assembled, and an amorphous carbon coating layer (shell) positioned on a surface of the secondary particle. The amorphous carbon may also be positioned between the primary silicon particles, and for example, the primary silicon particles may be coated with the amorphous carbon. The secondary particles may be dispersed in an amorphous carbon matrix.

The silicon-carbon composite may further include crystalline carbon. For example, the silicon-carbon composite may include a core including crystalline carbon and silicon particles and may also include an amorphous carbon coating layer positioned on a surface of the core.

The Si-based negative electrode active material or the Sn-based negative electrode active material may be used in combination with a carbon-based negative electrode active material.

Binder

The binder may include a first binder.

The first binder may include, e.g., a hydrogenated nitrile butadiene rubber (HNBR) derivative. The hydrogenated nitrile butadiene rubber derivative may exhibit adhesive strength in an equivalent or higher level, while having a low resistance. Thus, the rechargeable lithium battery may have an increased lifetime.

The binder may include a repeating unit of an acrylonitrile-derived structure expressed by Chemical Formula 1 below; at least repeating unit of hydrogenated butadiene-derived structures expressed by Chemical Formula 2a below, Chemical Formula 2b below, and Chemical Formula 3 below; and a repeating unit including Chemical Formula 4 below.

[Chemical Formula 1]

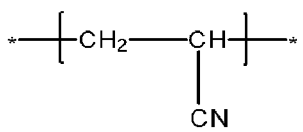

[Chemical Formula 2a]

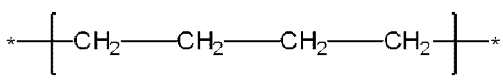

[Chemical Formula 2b]

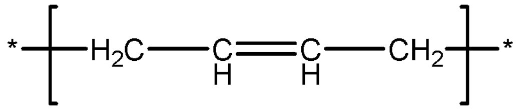

[Chemical Formula 3]

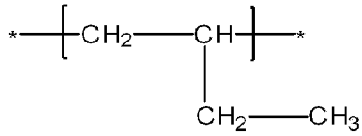

[Chemical Formula 4]

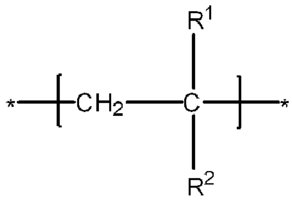

In Chemical Formula 4, $R^1$ and $R^2$ may each independently be or include at least one of a substituted or unsubstituted C1 to C20 alkyl group, an ester group (-COOR, where R is a substituted or unsubstituted C1 to C20 alkyl group), a cyano group (-CN), a pyrrolidonyl group ($-C_{-3}H_5NHCO$), a carboxyl group (-COOH), a caprolactamyl group ($-NCOC_5H_{10}$), a morpholinyl group ($-NC_4H_8O$), a hydroxyl group (-OH), an amino group ($-NH_2$), a vinyl group ($-CH=CH_2$), an epoxy group ($-COCH_2$), or a thiol group (-SH).

Compared to hydrogenated nitrile butadiene rubber, the first binder including the hydrogenated nitrile butadiene rubber derivative may further include a repeating unit including Chemical Formula 4 above, and thus may have increased adhesive strength.

The first binder may be expressed by Chemical Formula A below.

[Chemical Formula A]

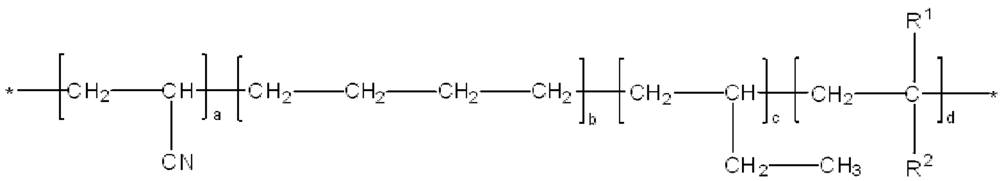

In Chemical Formula A, $R^1$ and $R^2$ may be as previously described. For example, $R^1$ may be or include a methyl group, and $R^2$ may be a carboxyl group (-COOH).

Moreover, in Chemical Formula A, a, b, c, and d may each independently be an integer of 1 to 20.

A representative example of the first binder may be or include as follows.

[Chemical Formula 11]

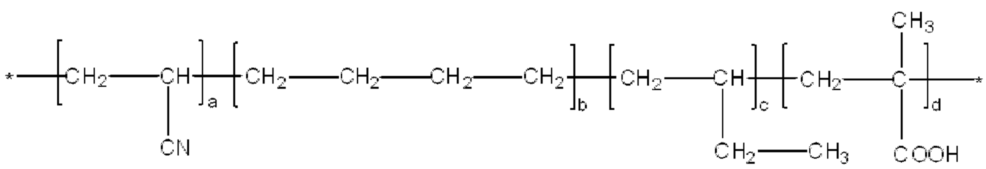

In Chemical Formula 11, a, b, c, and d may be as previously described.

The first binder may have a weight average molecular weight (Mw), which is measured by GPC (gel permeation chromatography), in a range of about 100,000 g/mol to about 1,000,000 g/mol, about 100,000 g/mol to about 500,000 g/mol, or about 100,000 g/mol to about 300,000 g/mol.

The first binder may be included in an amount of about 0.1 wt% to about 5 wt%, about 0.3 wt% to about 3 wt%, about 0.5 wt% to about 2 wt%, or about 0.55 wt% to about 1.1 wt% relative to the total weight of an electrode mixture layer.

The binder may further include a second binder.

The second binder may include hydrogenated nitrile butadiene rubber (HNBR).

The second binder may include at least one of a repeating unit of an acrylonitrile-derived structure expressed by Chemical Formula 5 below; a repeating unit including at least one of a repeating unit of alkylene expressed by Chemical Formula 6 below and repeating units of hydrogenated butadiene-derived structures expressed by Chemical Formulae 7a and 7b below; and a repeating unit expressed by Chemical Formula 8 below.

[Chemical Formula 5]

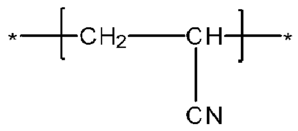

[Chemical Formula 6]

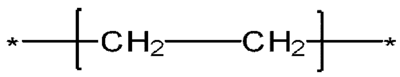

[Chemical Formula 7a]

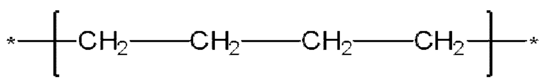

[Chemical Formula 7b]

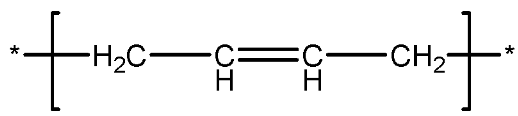

[Chemical Formula 8]

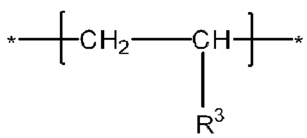

In Chemical Formula 8,

$R^3$ may be or include a substituted or unsubstituted C1 to C20 alkyl group, an ester group (-COOR, where R is a substituted or unsubstituted C1 to C20 alkyl group), a cyano group (-CN), a pyrrolidonyl group ($-C-_3H_5NHCO$), a carboxyl group (-COOH), a caprolactamyl group ($-NCOC_5H_{10}$), a morpholinyl group ($-NC_4H_8O$), a hydroxyl group (-OH), an amino group ($-NH_2$), a vinyl group ($-CH=CH_2$), an epoxy group ($-COCH_2$), or a thiol group (-SH).

The second binder may be expressed by Chemical Formula 21 or 22 below.

[Chemical Formula 21]

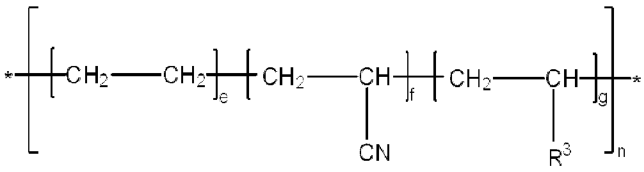

[Chemical Formula 22]

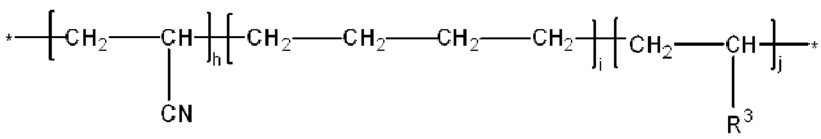

In Chemical Formulae 21 and 22, $R^3$ may be as previously described. For example, $R^3$ may be or include an ethyl group or an ester group (-COOR), where R may be a substituted or unsubstituted C1 to C20 alkyl group.

Moreover, in Chemical Formulae 21 and 22, e, f, g, h, i, j, and n may each independently be an integer of 1 to 20.

A representative example of the second binder may be as follows.

[Chemical Formula 21-1]

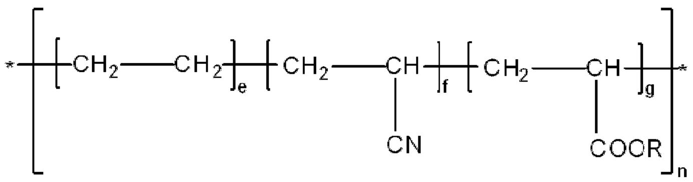

[Chemical Formula 22-1]

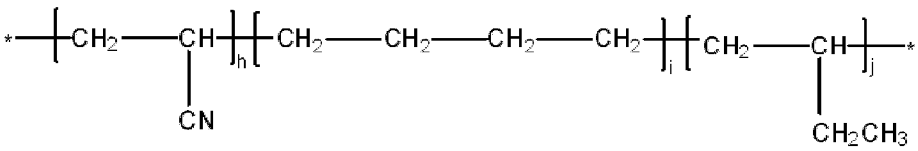

In Chemical Formulae 21-1 and 22-1, R, e, f, g, h, i, j, and n may be as previously described.

The second binder may have a weight average molecular weight (Mw), which is measured by GPC, in a range of about 100,000 g/mol to about 1,000,000 g/mol, about 100,000 g/mol to about 500,000 g/mol, or about 100,000 g/mol to about 300,000 g/mol.

The second binder may be included in an amount of more than about 0 wt% to about 5 wt%, about 0.1 wt% to about 3 wt%, about 0.1 wt% to about 2 wt%, or about 0.2 wt% to about 0.3 wt% relative to the total weight of an electrode mixture layer.

The binder may further include a third binder.

The third binder may include at least polyvinylidenefluoride, a derivative of polyvinylidenefluoride, a polymer containing polyvinylidenefluoride, or a combination thereof

It may be recommended that the third binder is complexly replaced with the first binder or a mixture of the first and second binders, but to ensure adhesive strength and compatibility, the third binder may be used in combination of other binders.

The third binder may include a repeating unit of polyvinylidenefluoride-derived structure expressed by Chemical Formula 9 below.

[Chemical Formula 9]

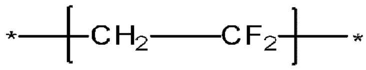

In addition, the third binder may selectively further include at least one of a repeating unit of polyvinylidenefluoride derivative-derived structure expressed by Chemical Formula 10 below and a repeating unit of hexafluoropropylene-derived structure expressed by Chemical Formula 11 below.

[Chemical Formula 10]

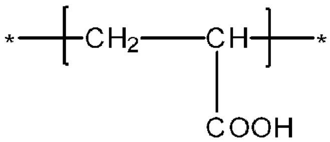

[Chemical Formula 11]

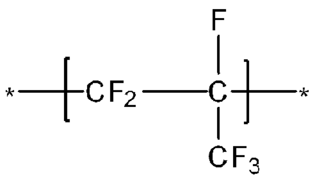

A representative example of the third binder may be as follows.

[Chemical Formula 31]

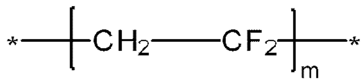

[Chemical Formula 32]

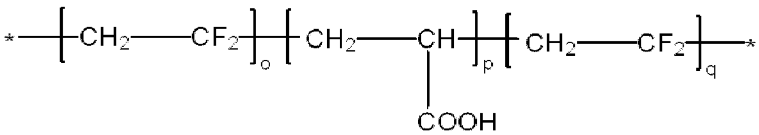

[Chemical Formula 33]

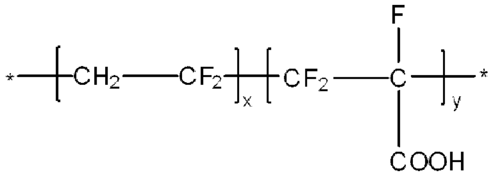

In Chemical Formulae 31 to 33, m, o, p, q, x, and y may each independently be an integer of 1 to 20.

The third binder may have a weight average molecular weight (Mw), which is measured by GPC, in a range of about 500,000 g/mol to about 5,000,000 g/mol, about 500,000 g/mol to about 3,000,000 g/mol, or about 500,000 g/mol to about 1,500,000 g/mol.

The third binder may be included in an amount of more than about 0 wt% to about 3 wt%, more than about 0 wt% to

about 2 wt%, more than about 0 wt% to about 1 wt%, or more than about 0 wt% to about 0.1 wt% relative to the total weight of an electrode mixture layer.

The binder may further include a fourth binder.

The fourth binder may include at least an acrylic binder, a derivative of the acrylic binder, a copolymer containing the acrylic binder, or a combination thereof.

The fourth binder may include at least poly(meth)acrylic acid, poly(meth)acrylate, polymethyl(meth)acrylate, polyacrylonitrile, acrylonitrile-styrene-butadiene copolymer, or any combination thereof.

The fourth binder may be included in an amount of more than about 0 wt% to about 3 wt%, more than about 0 wt% to about 2 wt%, more than about 0 wt% to about 1 wt%, or more than about 0 wt% to about 0.1 wt% relative to the total weight of an electrode mixture layer.

According to some example embodiments of the present disclosure, a rechargeable lithium battery may include an electrode and an electrolyte, and the electrode may include a current collector and an active material layer that is prepared using an electrode slurry for the rechargeable lithium battery. The electrode slurry for the rechargeable lithium battery is discussed above, and a detailed description thereof will be omitted.

The electrode may include a positive electrode.

Positive Electrode 10

The positive electrode 10 for a rechargeable lithium battery may include a current collector COL1 and a positive electrode active material layer AML1 formed on the current collector COL1. The positive electrode active material layer AML1 may include a positive electrode active material, and may further include a binder and/or a conductive material.

For example, the positive electrode 10 may further include an additive that may be configured as a sacrificial positive electrode.

An amount of the positive electrode active material may be about 90 wt% to about 99.5 wt% relative to 100 wt% of the positive electrode active material layer AML1. An amount of each of the binder and the conductive material may be about 0.5 wt% to about 5 wt% relative to 100 wt% of the positive electrode active material layer AML 1.

The binder may improve attachment of positive electrode active material particles to each other and may also improve attachment of the positive electrode active material to the current collector COL1. The binder may include, for example, at least one of polyvinyl alcohol, carboxymethyl cellulose, hydroxypropyl cellulose, diacetyl cellulose, polyvinylchloride, carboxylated polyvinylchloride, polyvinylfluoride, ethylene oxide-containing polymer, polyvinylpyrrolidone, polyurethane, polytetrafluoroethylene, polyvinylidene fluoride, polyethylene, polypropylene, styrene-butadiene rubber, (meth)acrylated styrene-butadiene rubber, epoxy resin, (meth)acrylic resin, polyester resin, or nylon, but the present disclosure is not limited thereto.

The conductive material may provide an electrode with conductivity, and any suitable conductive material that does not cause chemical change in a battery may be used as the conductive material to constitute the battery. The conductive material may include, for example, a carbon-based material such as at least natural graphite, artificial graphite, carbon black, acetylene black, Ketjenblack, carbon fiber, carbon nano-fiber, and carbon nano-tube; a metal powder or metal fiber containing one or more of copper, nickel, aluminum, and silver; a conductive polymer such as a polyphenylene derivative; or a mixture thereof.

Aluminum (Al) may be used as the current collector COL1, but the present disclosure is not limited thereto.

The electrode may include a negative electrode.

Negative Electrode 20

The negative electrode 20 for a rechargeable lithium battery may include a current collector COL2 and a negative electrode active material layer AML2 positioned on the current collector COL2. The negative electrode active material layer AML2 may include a negative electrode active material, and may further include a binder and/or a conductive material.

For example, the negative electrode active material layer AML2 may include a negative electrode active material in a concentration of about 90 wt% to about 99 wt%, a binder of about 0.5 wt% to about 5 wt%, and a conductive material of about 0 wt% to about 5 wt%.

The binder may improve attachment of negative electrode active material particles to each other and also improve attachment of the negative electrode active material to the current collector COL2. The binder may include at least a non-aqueous binder, an aqueous binder, a dry binder, or a combination thereof.

The non-aqueous binder may include at least polyvinyl chloride, carboxylated polyvinyl chloride, polyvinyl fluoride, ethylene propylene copolymer, polystyrene, polyurethane, polytetrafluoroethylene, polyvinylidene fluoride, polyethylene, polypropylene, polyamide imide, polyimide, or a combination thereof.

The aqueous binder may include at least styrene-butadiene rubber, (meth)acrylated styrene-butadiene rubber,

(meth)acrylic rubber, butyl rubber, fluoro elastomer, polyethylene oxide, polyvinyl pyrrolidone, polyepichlorohydrin, polyphosphazene, poly(meth)acrylonitrile, ethylene propylene diene copolymer, polyvinyl pyridine, chlorosulfonated polyethylene, latex, polyester resin, (meth)acrylic resin, phenolic resin, epoxy resin, polyvinyl alcohol, or a combination thereof.

When an aqueous binder is used as the negative electrode binder, a cellulose-based compound capable of providing viscosity may further be included. The cellulose-based compound may include one or more of carboxymethyl cellulose, hydroxypropylmethyl cellulose, methyl cellulose, and alkali metal salts thereof. The alkali metal may include at least one of Na, K, or Li.

The dry binder may include a fibrillizable polymer material, for example, at least polytetrafluoroethylene, polyvinylidene fluoride, polyvinylidene fluoride-hexafluoropropylene copolymer, polyethylene oxide, or a combination thereof.

The conductive material may provide an electrode with conductivity, and any suitable conductive material that does not cause chemical change in a battery may be used as the conductive material to constitute the battery. For example, the conductive material may include a carbon-based material such as at least one of natural graphite, artificial graphite, carbon black, acetylene black, Ketjenblack, carbon fiber, carbon nano-fiber, and carbon nano-tube; a metal powder or metal fiber including one or more of copper, nickel, aluminum, and silver; a conductive polymer such as a polyphenylene derivative; or a mixture thereof.

The current collector COL2 may include at least a copper foil, a nickel foil, a stainless-steel foil, a titanium foil, a nickel foam, a copper foam, a polymer substrate coated with a conductive metal, or a combination thereof.

The rechargeable lithium battery may include an electrolyte. The electrolyte may include an electrolyte solution ELL or a solid electrolyte.

Electrolyte Solution ELL

Based on type of the rechargeable lithium battery, the electrolyte solution ELL may be included as the electrolyte.

The electrolyte solution ELL for the rechargeable lithium battery may include a non-aqueous organic solvent and a lithium salt.

The non-aqueous organic solvent may be or include a medium for transmitting ions that participate in an electrochemical reaction of the battery.

The non-aqueous organic solvent may include at least a carbonate-based solvent, an ester-based solvent, an ether-based solvent, a ketone-based solvent, an alcohol-based solvent, an aprotic solvent, or a combination thereof.

The carbonate-based solvent may include at least one of dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), or butylene carbonate (BC).

The ester-based solvent may include at least one of methyl acetate, ethyl acetate, n-propyl acetate, dimethyl acetate, methyl propionate, ethyl propionate, decanolide, mevalonolactone, valerolactone, or caprolactone.

The ether-based solvent may include at least one of dibutyl ether, tetraglyme, diglyme, dimethoxyethane, 2-methyltetrahydrofuran, 2.5-dimethyltetrahydrofuran, or tetrahydrofuran. The ketone-based solvent may include cyclohexanone. The aprotic solvent may include nitriles such as R-CN (where R is a hydrocarbon group having a C2 to C20 linear, branched, or cyclic structure and may include a double bond, an aromatic ring, or an ether group); amides such as dimethylformamide; dioxolanes such as 1,3-dioxolane or 1.4-dioxolane; or sulfolanes.

The non-aqueous organic solvent may be used alone or in a mixture of two or more substances.

In addition, when a carbonate-based solvent is used, a cyclic carbonate and a chain carbonate may be mixed and used, and the cyclic carbonate and the chain carbonate may be mixed in a volume ratio of about 1:1 to about 1:9.

The lithium salt may be or include a material that is dissolved in the non-aqueous organic solvent to constitute a supply source of lithium ions in a battery and contributes to enabling a basic operation of a rechargeable lithium battery and in promoting the movement of lithium ions between positive and negative electrodes. The lithium salt may include, for example, at least one of $LiPF_6$, $LiBF_4$, $LiSbF_6$, $LiAsF_6$, $LiClO_4$, $LiAlO_2$, $LiAlCl_4$, $LiPO_2F_2$, LiCl, LiI, $LiN(SO_3C_2F_5)_2$, $Li(FSO_2)_2N$ (lithium bis(fluorosulfonyl)imide, LiFSI), $LiC_4F_9SO_3$, $LiN(C_xF_{2x+1}SO_2)(C_yF_{2y+1}SO_2)$ (where x and y are integers of 1 to 20), lithium trifluoromethane sulfonate, lithium tetrafluoroethanesulfonate, lithium difluorobis(oxalato) phosphate (LiDFBOP), and lithium bis(oxalato)borate (LiBOB)

Solid Electrolyte

Based on type of the rechargeable lithium battery, the solid electrolyte may be included as the electrolyte.

The solid electrolyte may include a sulfide-based solid electrolyte with desired, advantageous or improved lithium-ion conductivity characteristics. The sulfide-based solid electrolyte may include, for example, at least one of $Li_2S$-$P_2S_5$, $Li_2S$-$P_2S_5$-LiX (where X is a halogen element), $Li_2S$-$P_2S_5$-$Li_2O$, $Li_2S$-$P_2S_5$-$Li_2O$-LiI, $Li_2S$-$SiS_2$, $Li_2S$-$SiS_2$-LiI, $Li_2S$-

$SiS_2$-LiBr, $Li_2S$-$SiS_2$-LiCl, $Li_2S$-$SiS_2$-$B_2S_3$-LiI, $Li_2S$-$SiS_2$-$P_2S_5$-LiI, $Li_2S$-$B_2S_3$, $Li_2S$-$P_2S_5$-$Z_mS_n$ (where m and n are each a positive integer, the capital "Z" is one of Ge, Zn, and Ga), $Li_2S$-$GeS_2$, $Li_2S$-$SiS_2$-$Li_3PO_4$, $Li_2S$-$SiS_2$-$Li_pMO_q$ (where p and q are each a positive integer, the capital "M" is one of P, Si, Ge, B, Al, Ga, and In), $Li_{7-x}PS_{6-x}Cl_x$ (where $0 \leq x \leq 2$), $Li_{7-x}PS_{6-x}Br_x$ (where $0 \leq x \leq 2$), and $Li_{7-x}PS_{6-x}I_x$ (where $0 \leq x \leq 2$).

The sulfide-based solid electrolyte may be or include an argyrodite-type compound including, for example, at least one of $Li_{7-x}PS_{6-x}Cl_x$ (where $0 \leq x \leq 2$), $Li_{7-x}PS_{6-x}Br_x$ (where $0 \leq x \leq 2$), and $Li_{7-x}PS_{6-x}I_x$ (where $0 \leq x \leq 2$). For example, the sulfide-based solid electrolyte may be or include an argyrodite-type compound including at least one of $Li_6PS_5Cl$, $Li_6PS_5Br$, and $Li_6PS_5I$. The argyrodite-type solid electrolyte may have a density of about 1.5 g/cc to about 2.0 g/cc. As the argyrodite-type solid electrolyte has a density of equal to or greater than about 1.5 g/cc, it may be possible to decrease an internal resistance of an all-solid-state battery and to hinder or prevent a solid electrolyte layer from short-circuit and penetration caused by the formation of lithium dendrite. The solid electrolyte may have an elastic modulus of, for example, about 15 GPa to about 35 GPa.

According to some example embodiments of the present disclosure, the rechargeable lithium battery may further include a separator between the positive electrode and the negative electrode.

Separator 30

Based on type of the rechargeable lithium battery, the separator 30 may be located between the positive electrode 10 and the negative electrode 20. The separator 30 may include one or more of at least polyethylene, polypropylene, and polyvinylidene fluoride, and may have a multi-layered separator thereof such as a polyethylene/polypropylene bi-layered separator, a polyethylene/polypropylene/polyethylene tri-layered separator, and a polypropylene/polyethylene/polypropylene tri-layered separator.

The separator 30 may include a porous substrate and a coating layer on one or opposite surfaces of the porous substrate, the coating layer including an organic material, an inorganic material, or a combination thereof.

The porous substrate may be a polymer layer including one of polyolefin such as at least one of polyethylene and polypropylene, polyester such as polyethylene terephthalate and polybutylene terephthalate, polyacetal, polyamide, polyimide, polycarbonate, polyetherketone, polyaryletherketone, polyetherimide, polyamideimide, polybenzimidazole, polyethersulfone, polyphenyleneoxide, cyclic olefin copolymer, polyphenylenesulphide, polyethylene naphthalate, glass fiber, Teflon, and polytetrafluoroethylene, or may be a copolymer or mixture including two or more of the materials mentioned above.

The organic material may include a polyvinylidenefluoride-based copolymer or a (meth)acrylic copolymer.

The inorganic material may include an inorganic particle such as at least one of $Al_2O_3$, $SiO_2$, $TiO_2$, $SnO_2$, $CeO_2$, MgO, NiO, CaO, GaO, ZnO, $ZrO_2$, $Y_2O_3$, $SrTiO_3$, $BaTiO_3$, $Mg(OH)_2$, Boehmite, or a combination thereof, but the present disclosure is not limited thereto.

The organic material and the inorganic material may be mixed in one coating layer or may be configured as a stack of a coating layer including the organic material and a coating layer including an inorganic material.

FIG. 1 illustrates a simplified conceptual diagram showing a rechargeable lithium battery according to an example embodiment of the present disclosure. Referring to FIG. 1, a rechargeable lithium battery may include a positive electrode 10, a negative electrode 20, a separator 30, and an electrolyte solution ELL.

The positive electrode 10 and the negative electrode 20 may be spaced apart from each other across the separator 30. The separator 30 may be disposed between the positive electrode 10 and the negative electrode 20. The positive electrode 10, the negative electrode 20, and the separator 30 may be in contact with the electrolyte solution ELL. The positive electrode 10, the negative electrode 20, and the separator 30 may be impregnated in the electrolyte solution ELL.

The electrolyte solution ELL may be or include a medium by which lithium ions are transferred between the positive electrode 10 and the negative electrode 20. In the electrolyte solution ELL, the lithium ions may move through the separator 30 toward one of the positive electrode 10 and the negative electrode 20.

Rechargeable Lithium Battery

Based on the shape of a rechargeable lithium battery, the rechargeable lithium battery may be classified as cylindrical, prismatic, pouch, and coin. FIGS. 2 to 5 illustrate simplified diagrams showing a rechargeable lithium battery according to an example embodiment, FIG. 2 illustrating a cylindrical battery, FIG. 3 illustrating a prismatic battery, and FIGS. 4 and 5 illustrating pouch-type batteries. Referring to FIGS. 2 to 4, a rechargeable lithium battery 100 may include an electrode assembly 40 in which a separator 30 is interposed between a positive electrode 10 and a negative electrode 20, and may also include a casing 50 in which the electrode assembly 40 is accommodated. The positive electrode 10, the negative electrode 20, and the separator 30 may be impregnated in an electrolyte solution (not shown). The rechargeable lithium battery 100 may include a sealing member 60 that seals the casing 50, as illustrated in FIG. 2. In addition, as

illustrated in FIG. 3, the rechargeable lithium battery 100 may include a positive electrode lead tab 11, a positive electrode terminal 12, a negative electrode lead tab 21, and a negative electrode terminal 22. As shown in FIGS. 4 and 5, the rechargeable lithium battery 100 may include an electrode tab 70 illustrated I FIG. 5, or a positive electrode tab 71 and a negative electrode tab 72 illustrated in FIG. 4, which electrode tab 70 or electrode tabs 71 and 72 form an electrical path for externally transmitting a current generated in the electrode assembly 40.

The following description relates to example embodiments of the present disclosure. The following example embodiments are provided to aid in understanding of the present disclosure and are not intended to limit the scope of the present disclosure.

Embodiment 1

2.5 wt% of a conductive material or a double-walled carbon nano-tube (average length: 50 μm, average diameter: 1 nm to 1 μm, and specific surface area: 250 to 300 $m^2/g$) and 0.3 wt% of hydrogenated nitrile butadiene rubber (HNBR) were added to 97.2 wt% of an N-methylpyrrolidone (NMP) solvent, and dispersed for 12 hours to prepare 2.8 wt% of a conductive material dispersion.

A positive electrode active material ($LiNi_{0.94}Co_{0.045}Al_{0.015}O_2$ ($D_{50}$: 13 μm)), the conductive material dispersion, a hydrogenated nitrile butadiene rubber binder were mixed in a water solvent to prepare a positive electrode active material layer slurry. In the slurry prepared by the mixing process, an amount of each material was adjusted to 98.4 wt% of the positive electrode active material, 0.4 wt% of the conductive material, and 1.2 wt% of the binder.

Embodiment 2

A positive electrode active material layer slurry was prepared in the same method as in Embodiment 1, with a difference that 3.5 wt% of a conductive material or a double-walled carbon nano-tube (average length: 50 μm, average diameter: 1 nm to 1 μm, and specific surface area: 250 to 300 $m^2/g$) and 0.6 wt% of a hydrogenated nitrile butadiene rubber (HNBR) dispersant were added to 95.9 wt% of an N-methylpyrrolidone (NMP) solvent, and dispersed for 12 hours to prepare 4.1 wt% of a conductive material dispersion.

Embodiment 3

A positive electrode active material layer slurry was prepared in the same method as in Embodiment **1,** with a difference that 5 wt% of a conductive material or a double-walled carbon nano-tube (average length: 50 μm, average diameter: 1 nm to 1 μm, and specific surface area: 250 to 300 $m^2/g$) and 1 wt% of a hydrogenated nitrile butadiene rubber (HNBR) dispersant were added to 94 wt% of an N-methylpyrrolidone (NMP) solvent, and dispersed for 12 hours to prepare 6 wt% of a conductive material dispersion.

Embodiment 4

A positive electrode active material layer slurry was prepared in the same method as in Embodiment **1,** with a difference that 5 wt% of a conductive material or a double-walled carbon nano-tube (average length: 50 μm, average diameter: 1 nm to 1 μm, and specific surface area: 250 to 300 $m^2/g$) and 1 wt% of a hydrogenated nitrile butadiene rubber (HNBR) dispersant were added to 94 wt% of an N-methylpyrrolidone (NMP) solvent, and dispersed for 12 hours to prepare 6 wt% of a conductive material dispersion.

Embodiment 5

A positive electrode active material layer slurry was prepared in the same method as in Embodiment **1,** with a difference that 3 wt% of a conductive material or a double-walled carbon nano-tube (average length: 50 μm, average diameter: 1 nm to 1 μm, and specific surface area: 250 to 300 $m^2/g$) and 0.6 wt% of a hydrogenated nitrile butadiene rubber (HNBR) dispersant were added to 96.4 wt% of an N-methylpyrrolidone (NMP) solvent, and dispersed for 12 hours to prepare 3.6 wt% of a conductive material dispersion.

Embodiment 6

A positive electrode active material layer slurry was prepared in the same method as in Embodiment 1, with a difference that 3 wt% of a conductive material or a double-walled carbon nano-tube (average length: 50 μm, average diameter: 1 nm to 1 μm, and specific surface area: 250 to 300 $m^2/g$) and 0.6 wt% of a hydrogenated nitrile butadiene rubber (HNBR) dispersant were added to 96.4 wt% of an N-methylpyrrolidone (NMP) solvent, and dispersed for 12 hours to

prepare 3.6 wt% of a conductive material dispersion.

Embodiment 7

A positive electrode active material layer slurry was prepared in the same method as in Embodiment 1, with a difference that 3 wt% of a conductive material or a double-walled carbon nano-tube (average length: 50 μm, average diameter: 1 nm to 1 μm, and specific surface area: 250 to 300 $m^2/g$) and 0.6 wt% of a hydrogenated nitrile butadiene rubber (HNBR) dispersant were added to 96.4 wt% of an N-methylpyrrolidone (NMP) solvent, and dispersed for 12 hours to prepare 3.6 wt% of a conductive material dispersion.

Comparative Example 1

A positive electrode active material layer slurry was prepared in the same method as in Embodiment 1, with a difference that 5 wt% of a conductive material or a double-walled carbon nano-tube (average length: 50 μm, average diameter: 1 nm to 1 μm, and specific surface area: 250 to 300 $m^2/g$) and 1 wt% of a hydrogenated nitrile butadiene rubber (HNBR) dispersant were added to 94 wt% of an N-methylpyrrolidone (NMP) solvent, and dispersed for 12 hours to prepare 6 wt% of a conductive material dispersion.

Comparative Example 2

A positive electrode active material layer slurry was prepared in the same method as in Embodiment 1, with a difference that 3 wt% of a conductive material or a double-walled carbon nano-tube (average length: 50 μm, average diameter: 1 nm to 1 μm, and specific surface area: 250 to 300 $m^2/g$) and 0.45 wt% of a hydrogenated nitrile butadiene rubber (HNBR) dispersant were added to 96.55 wt% of an N-methylpyrrolidone (NMP) solvent, and dispersed for 12 hours to prepare 3.45 wt% of a conductive material dispersion.

Comparative Example 3

A positive electrode active material layer slurry was prepared in the same method as in Embodiment 1, with a difference that 3 wt% of a conductive material or a double-walled carbon nano-tube (average length: 50 μm, average diameter: 1 nm to 1 μm, and specific surface area: 250 to 300 $m^2/g$) and 0.45 wt% of a hydrogenated nitrile butadiene rubber (HNBR) dispersant were added to 96.55 wt% of an N-methylpyrrolidone (NMP) solvent, and dispersed for 12 hours to prepare 3.45 wt% of a conductive material dispersion.

Comparative Example 4

A positive electrode active material layer slurry was prepared in the same method as in Embodiment 1, with a difference that 2.5 wt% of a conductive material or a double-walled carbon nano-tube (average length: 50 μm, average diameter: 1 nm to 1 μm, and specific surface area: 250 to 300 $m^2/g$) and 0.3 wt% of a hydrogenated nitrile butadiene rubber (HNBR) dispersant were added to 97.2 wt% of an N-methylpyrrolidone (NMP) solvent, and dispersed for 12 hours to prepare 2.8 wt% of a conductive material dispersion.

Table 1 below list concentrations of the solvents and the dispersions (conductive materials + dispersants) and specific surface areas of the conductive materials in Embodiments 1 to 7 and in Comparative Examples 1 to 4. Table 1 below also lists specific surface areas of the conductive material dispersions prepared according to Embodiments 1 to 7 and Comparative Examples 1 to 4.

[Table 1]

| | Conductive material (wt%) | Dispersant (wt%) | Solvent (wt%) | Concentration of dispersion (wt%) | Specific surface area of conductive material (CNT raw material) ($m^2/g$) | Specific surface area of conductive material dispersion ($m^2/g$) |
|---|---|---|---|---|---|---|
| Embodiment 1 | 2.5 | 0.3 | 97.2 | 2.8 | 250~300 | 299.6 |
| Embodiment 2 | 3.5 | 0.6 | 95.9 | 4.1 | 250~300 | 294.5 |

(continued)

| | Conductive material (wt%) | Dispersant (wt%) | Solvent (wt%) | Concentration of dispersion (wt%) | Specific surface area of conductive material (CNT raw material) ($m^2/g$) | Specific surface area of conductive material dispersion ($m^2/g$) |
|---|---|---|---|---|---|---|
| Embodiment 3 | 5 | 1 | 94 | 6 | 250~300 | 291.5 |
| Embodiment 4 | 5 | 1 | 94 | 6 | 250~300 | 277.7 |
| Embodiment 5 | 3 | 0.6 | 96.4 | 3.6 | 250~300 | 284.7 |
| Embodiment 6 | 3 | 0.6 | 96.4 | 3.6 | 250~300 | 292.2 |
| Embodiment 7 | 3 | 0.6 | 96.4 | 3.6 | 250~300 | 287.2 |
| Comparative Example 1 | 5 | 1 | 94 | 6 | 250~300 | 108.8 |
| Comparative Example 2 | 3 | 0.45 | 96.55 | 3.45 | 250~300 | 189.5 |
| Comparative Example 3 | 3 | 0.45 | 96.55 | 3.45 | 250~300 | 34.18 |
| Comparative Example 4 | 2.5 | 0.3 | 97.2 | 2.8 | 250~300 | 274.9 |

Referring to Table 1, it was observed that the specific surface area of the conductive material dispersion prepared by Embodiments 1 to 7 was significantly greater than the specific surface area of the conductive material dispersion of the conductive material dispersion prepared by Comparative Examples 1 to 3. Thus, it was ascertained that the conductive material of Embodiments 1 to 7 was favorably dispersed compared to the conductive material of Comparative Examples 1 to 3.

Experimental Example 1: Particle Size of Conductive Material Dispersion

A laser diffraction light scattering method was used to measure the particle size distribution and the maximum diameter (Dmax) of the conductive material dispersion prepared in Embodiments 1 to 7 and Comparative Examples 1 to 4. There were measured a maximum intensity A of first peak appearing in the particle size of equal to or less than 0.1 μm and a maximum intensity B of second peak appearing in the particle size of greater than 0.1 μm, the peaks A and B being illustrated in FIG. 6. The measured A and B were used to obtain A/B values. The results are listed in Table 2 below.

[Table 2]

| | A (vol%) | B (vol%) | A/B | Dmax (μm) |
|---|---|---|---|---|
| Embodiment 1 | 12.87 | 0.23 | 55.96 | 4.54 |
| Embodiment 2 | 15.162 | 0.375 | 40.46 | 6.6 |
| Embodiment 3 | 15.046 | 0.264 | 56.96 | 4.55 |
| Embodiment 4 | 14.108 | 0.358 | 39.39 | 1.1 |
| Embodiment 5 | 13.010 | 0.241 | 53.98 | 0.972 |
| Embodiment 6 | 15.135 | 0.288 | 52.56 | 1.61 |
| Embodiment 7 | 12.5 | 0.35 | 35.71 | 5.77 |

(continued)

| | A (vol%) | B (vol%) | A/B | Dmax (μm) |
|---|---|---|---|---|
| Comparative Example 1 | 4.517 | 4.109 | 1.10 | 23.9 |
| Comparative Example 2 | 8.414 | 3.264 | 2.58 | 18.1 |
| Comparative Example 3 | 1.5 | 8.387 | 0.18 | 30.9 |
| Comparative Example 4 | 11.45 | 0.19 | 60.26 | 11.7 |

Experimental Example 2: Slurry Powder Resistance

The active material layer slurry prepared in Embodiments 1 to 7 and Comparative Examples 1 to 4 was weighed 3.5 grams and a powder resistance meter (MCP-PD51) was used to measure a slurry powder resistance at pressures of 4, 8, 12, 16, and 20 kgf with a 4-pin probe under the condition of start range -3 ohm and 10 V. The results are listed in Table 3 below.

[Table 3]

| | Powder resistance (Ohm-cm) |
|---|---|
| Embodiment 1 | 19.62 |
| Embodiment 2 | 18.3 |
| Embodiment 3 | 16 |
| Embodiment 4 | 13.9 |
| Embodiment 5 | 12.7 |
| Embodiment 6 | 16.8 |
| Embodiment 7 | 8.7 |
| Comparative Example 1 | 35.3 |
| Comparative Example 2 | 31.6 |
| Comparative Example 3 | 52.39 |
| Comparative Example 4 | 28.76 |

As shown in Table 3, it may be ascertained that the slurry powder resistance of Embodiments 1 to 7 was relatively low. For example, it may be found that, when the conductive material dispersion satisfies $30 \leq A/B \leq 60$, the conductive material is sufficiently dispersed within the slurry.

It can be seen that the conductive material is sufficiently distributed even when the value of A/B is less than 30, but it may be advantageous to determine whether or not Dmax is equal to or less than 10 μm. Although the A/B ratio can numerically indicate good dispersion, when Dmax is 10 μm or more, the conductive material may still not be sufficiently dispersed. Additionally, the conductive material is favorably distributed when the specific surface area of the conductive material dispersion is about 270 $m^2/g$ or more.

In a conductive material dispersion for a rechargeable lithium battery according to the present disclosure, a conductive material may be favorably distributed to reduce the resistance of an electrode mixture layer. In conclusion, the rechargeable lithium battery may have improved cell performance.

Although some example embodiments of the present disclosure have been discussed with reference to accompanying figures, it will be understood that various changes in form and details may be made therein without departing from the spirit and scope of the present disclosure. It will be apparent to those skilled in the art that various substitution, modifications, and changes may be thereto without departing from the scope and spirit of the present disclosure.

## Claims

**1.** A conductive material dispersion for a rechargeable lithium battery (100), the conductive material dispersion

comprising:

a conductive material;
a solvent; and
a dispersant,
wherein a particle size distribution graph of the conductive material dispersion comprises:

a first peak at a particle size range that is equal to or less than about 0.1 μm; and
a second peak at a particle size range that is greater than about 0.1 μm,

wherein a maximum intensity of the first peak is A,
wherein a maximum intensity of the second peak is B, and
wherein A and B satisfy Equation 1 below,

[Equation 1]

$$30 \leq A/B \leq 60.$$

2. The conductive material dispersion of claim 1, wherein

the maximum intensity of the first peak is between about 10 vol% and about 20 vol%, and
the maximum intensity of the second peak is between about 0.1 vol% and about 5 vol%.

3. The conductive material dispersion of claim 1 or 2, wherein, when a particle size distribution of the conductive material dispersion is measured, the particle size distribution Dmax satisfies Equation 2,

[Equation 2]

$$0.1\ \mu m \leq Dmax \leq 10\ \mu m.$$

4. The conductive material dispersion of any one of claims 1 to 3, wherein a specific surface area of the conductive material is in a range of about 260 $m^2/g$ to about 1,000 $m^2/g$.

5. The conductive material dispersion of any one of claims 1 to 4, wherein the conductive material comprises at least one of natural graphite, artificial graphite, carbon black, acetylene black, Ketjenblack, carbon fiber, carbon nano-fiber, and carbon nano-tube.

6. The conductive material dispersion of any one of claims 1 to 5, wherein the conductive material comprises a carbon nano-tube.

7. The conductive material dispersion of any one of claims 1 to 6, wherein the conductive material comprises a carbon nano-tube, and wherein the carbon nano-tube comprises at least one of single-walled carbon nano-tubes, double-walled carbon nano-tubes, and multi-walled carbon nano-tubes.

8. The conductive material dispersion of any one of claims 1 to 7,

wherein the conductive material comprises a carbon nano-tube, and
wherein an average length of the carbon nano-tube is equal to or less than about 100 μm; or
wherein the conductive material comprises a carbon nano-tube, and the carbon nano-tube comprises at least one of single-walled carbon nano-tubes, double-walled carbon nano-tubes, and multi-walled carbon nano-tubes, and wherein an average length of the carbon nano-tube is equal to or less than about 100 μm.

9. The conductive material dispersion of any one of claims 6 to 8, wherein an average diameter of the carbon nano-tube is in a range of about 1 nm to about 1 μm.

10. The conductive material dispersion of any one of claims 6 to 9, wherein an amount of the carbon nano-tube is about 1

wt% to about 5 wt% relative to a total 100 wt% of the conductive material dispersion for the rechargeable lithium battery (100).

**11.** The conductive material dispersion of any one of claims 1 to 9, wherein the solvent comprises at least one of water, dimethylformamide, diethylformamide, dimethylacetamide (DMAc), and N-methylpyrrolidone (NMP).

**12.** The conductive material dispersion of any one of claims 1 to 11, wherein an amount of the dispersant is about 0.1 wt% to about 30 wt% relative to a total 100 wt% of the conductive material dispersion for the rechargeable lithium battery (100).

**13.** An electrode slurry for a rechargeable lithium battery (100), the electrode slurry comprising:

an electrode active material;
a binder; and
a conductive material dispersion,
wherein a particle size distribution graph of the conductive material dispersion comprises:

a first peak at a particle size range that is equal to or less than about 0.1 μm; and
a second peak at a particle size range that is greater than about 0.1 μm,

wherein a maximum intensity of the first peak is A,
wherein a maximum intensity of the second peak is B, and
wherein A and B satisfy Equation 1,

[Equation 1]

$$30 \leq A/B \leq 60.$$

**14.** The electrode slurry of claim 13, wherein the binder comprises a hydrogenated nitrile butadiene rubber (HNBR) derivative.

**15.** The electrode slurry of claim 13 or 14, wherein the binder comprises at least one of polyvinylidenefluoride, derivatives of the polyvinylidenefluoride, polymers containing the polyvinylidenefluoride, poly(meth)acrylic acid, poly(meth) acrylate, polymethyl(meth)acrylate, polyacrylonitrile, and acrylonitrile-styrene-butadiene copolymers.

FIG. 1

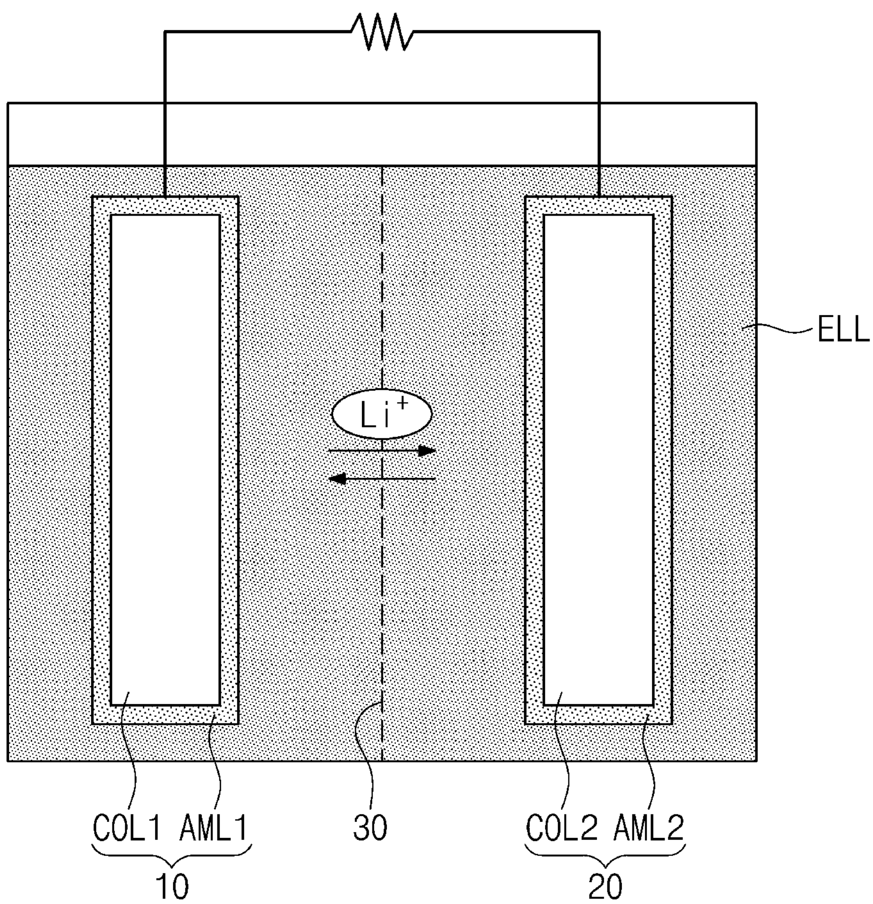

FIG. 2

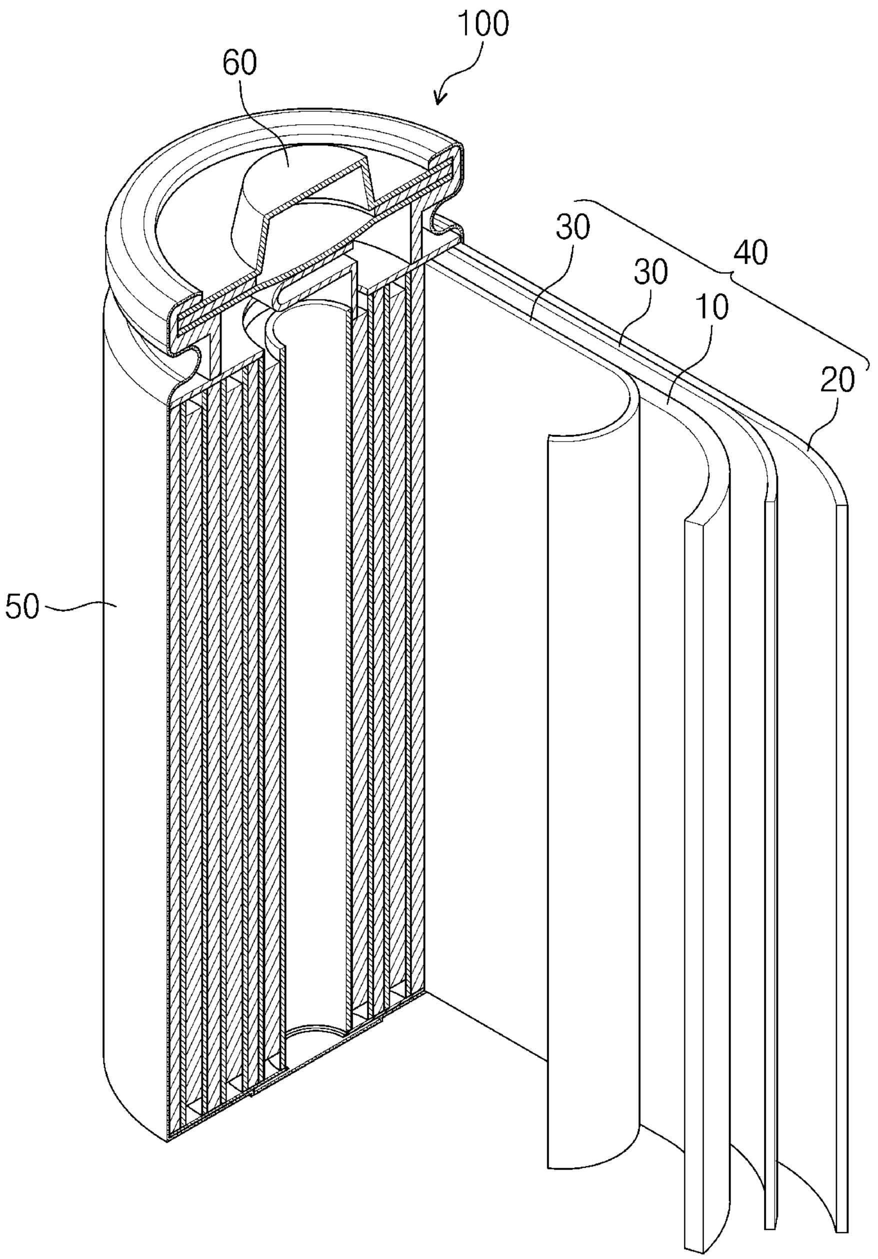

FIG. 3

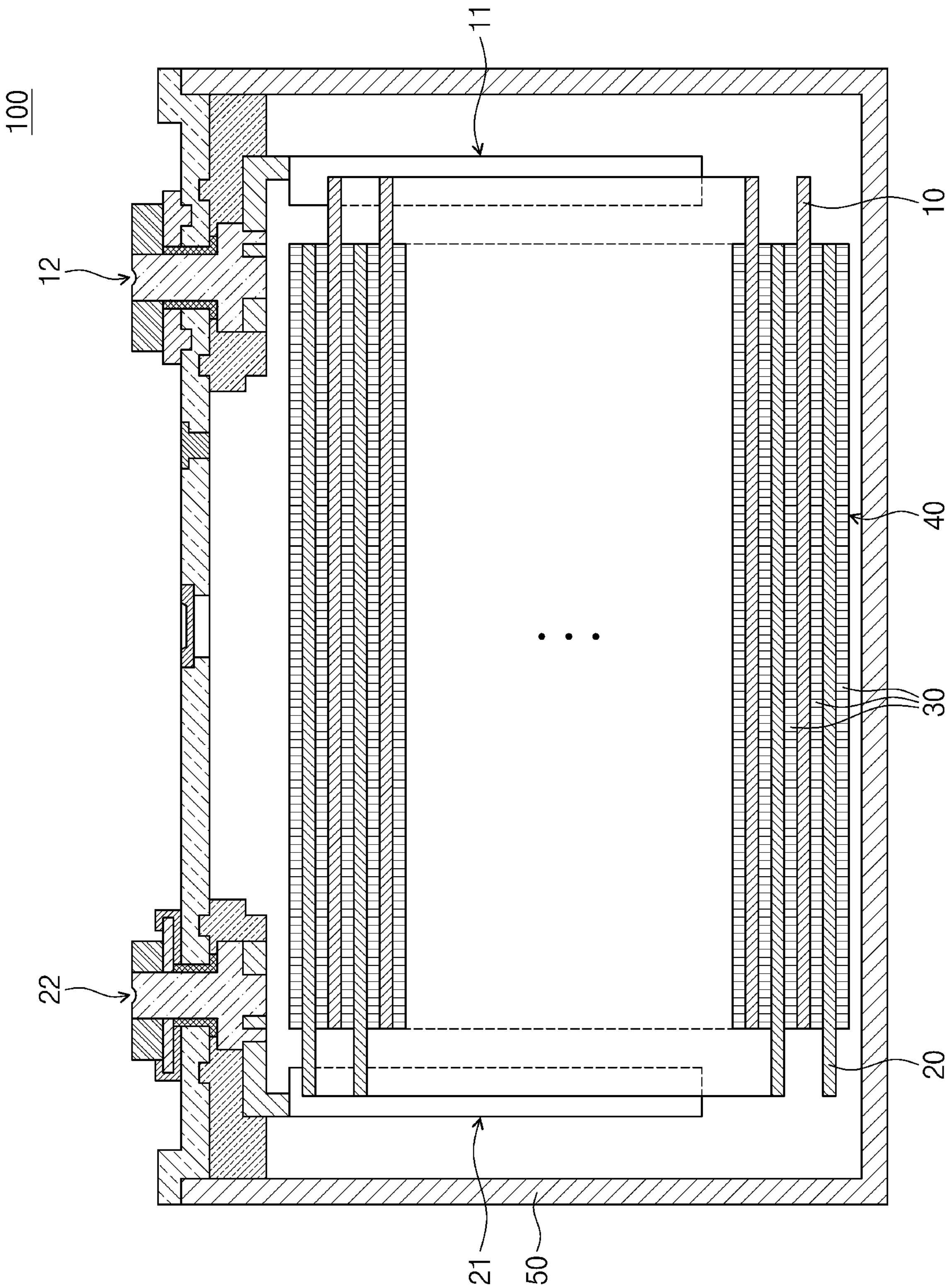

FIG. 4

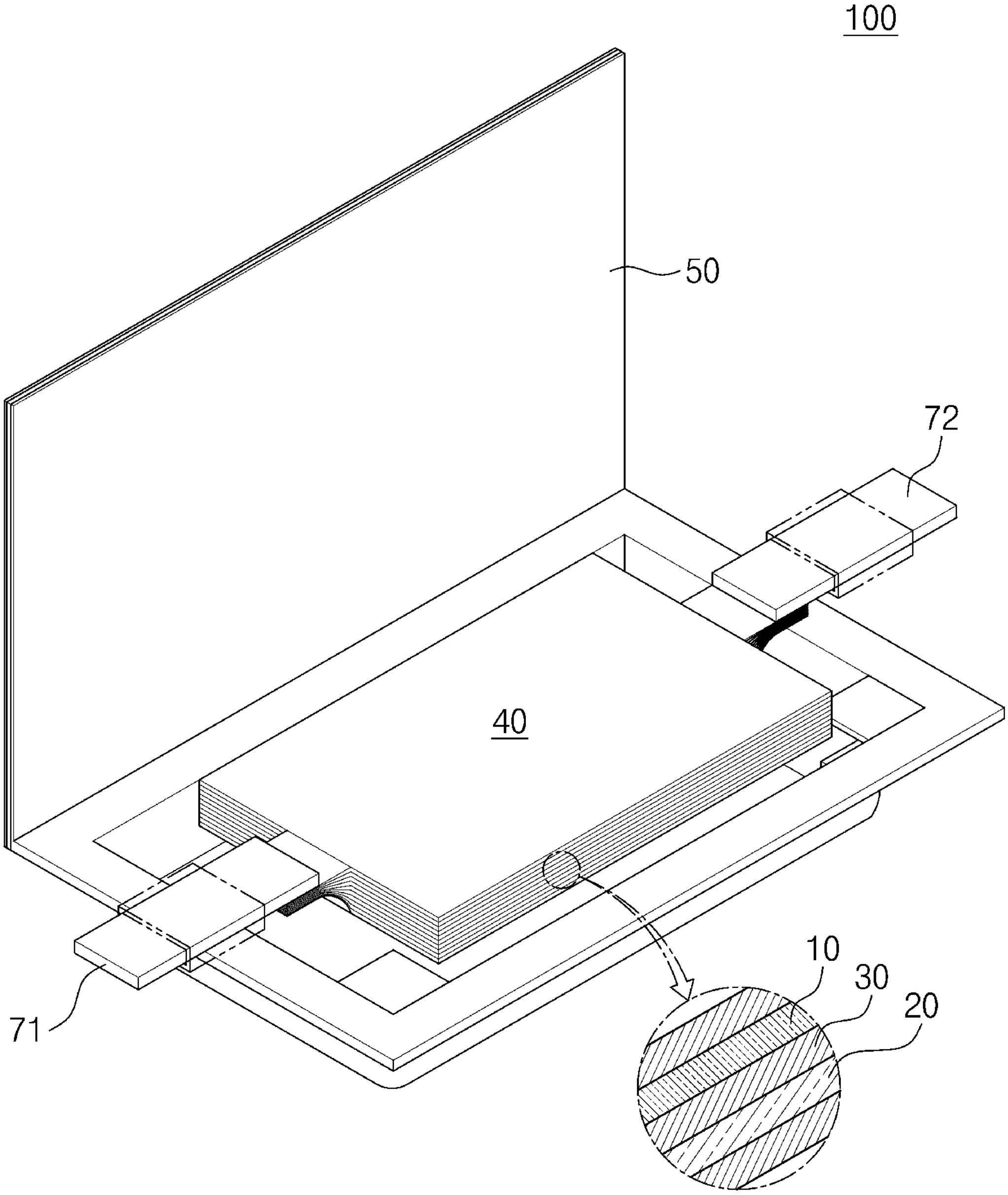

FIG. 5

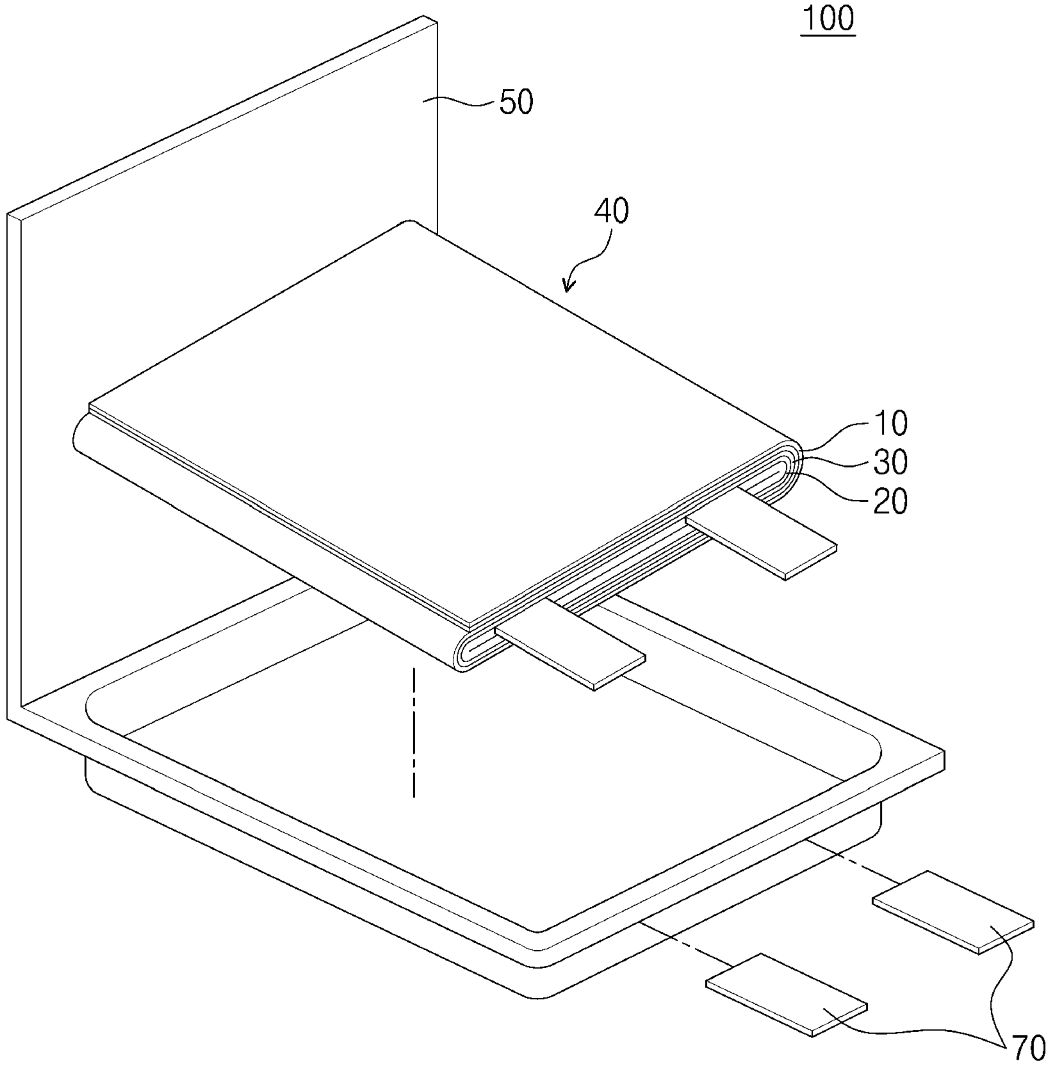

FIG. 6

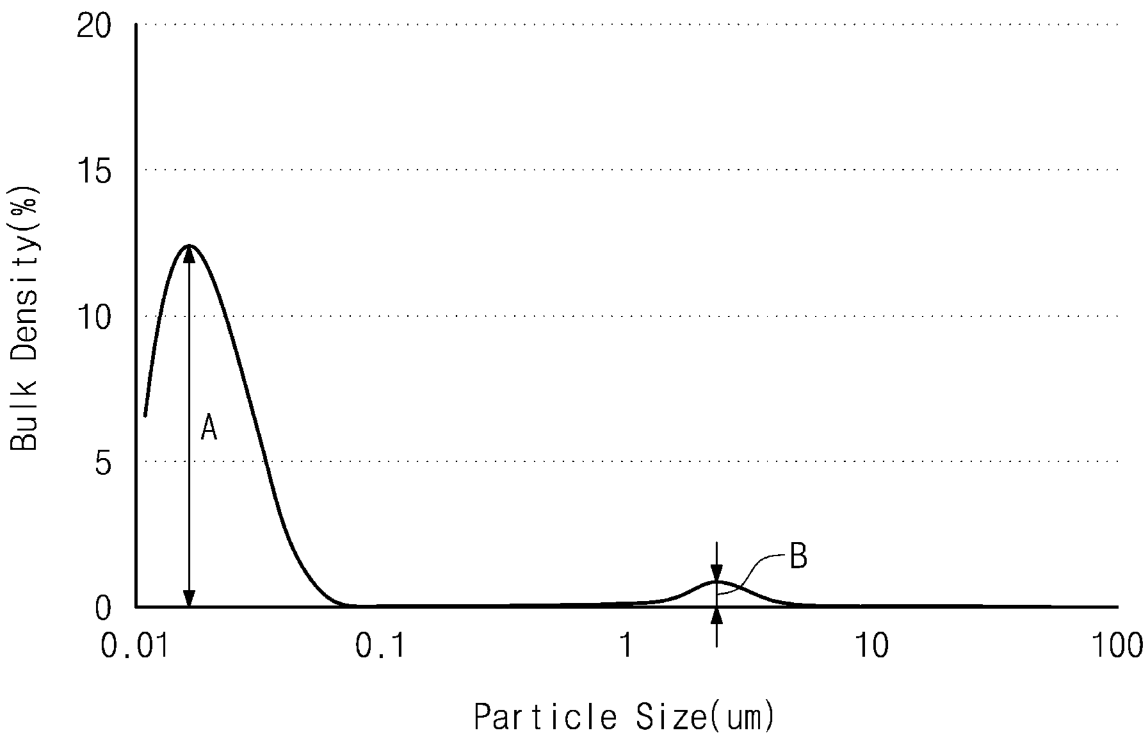

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- KR 1020240050575